(19) Europäisches Patentamt

European Patent Office

Office européen des brevets

(11) EP 0 295 850 B1

(12) **EUROPEAN PATENT SPECIFICATION**

(45) Date of publication and mention
of the grant of the patent:
**10.04.1996  Bulletin 1996/15**

(51) Int Cl.6: **H02P 7/00**, B01F 11/00,
B01F 15/00

(21) Application number: **88305385.2**

(22) Date of filing: **13.06.1988**

(54) **Speed control for orbital shaker with reversing mode**

Geschwinigkeitsregelung für einen umlaufenden Rüttler mit Umkehrmodus

Commande de vitesse pour secoueur orbital avec mode renversant la marche

(84) Designated Contracting States:
**AT BE CH DE FR GB IT LI LU NL SE**

(30) Priority: **15.06.1987 US 62265**

(43) Date of publication of application:
**21.12.1988  Bulletin 1988/51**

(73) Proprietor: **CYMATICS, INC.**
**Naperville, IL 60540 (US)**

(72) Inventors:
 • **Mikyska, Glenn Emil**
 **Naperville Illinois 60540 (US)**

 • **Stanley, William Walter**
 **Batavia Illinois 60510 (US)**

(74) Representative:
**Cross, Rupert Edward Blount et al**
**BOULT, WADE & TENNANT**
**27 Furnival Street**
**London EC4A 1PQ (GB)**

(56) References cited:
**EP-A- 0 077 455**      **EP-A- 0 140 424**
**WO-A-86/00995**       **FR-A- 1 565 187**
**GB-A- 2 081 118**      **GB-A- 2 155 347**

## Description

The present invention pertains generally to a speed control for agitation apparatus or the like, and is more specifically directed to a speed control for such agitation apparatus which is used in a laboratory environment to agitate an assay with a generally orbital motion and which incorporates a reversing mode.

In certain laboratory applications, it is desirable to move beakers, test tubes, or other containers which contain biological assays in an orbital path with a uniform motion. This uniform motion may also include a uniform speed so as to enable comparisons of the results of the mixtures achieved for different runs of the apparatus. In other words, it is desirable to move a first batch of assays in an identical motion, and for an identical number of cycles, as that of a second group of assays. The advantage of this uniformity is that it contributes to the elimination of another variable in the test and thus a source of error in a clinical assay. Therefore, precision and reproducibility are key goals in these clinical mixing apparatus.

In the past, apparatus for achieving such orbital motion for the mixing and agitation of clinical assays have not provided particularly good reliability in terms of the repetition of speed and number of cycles. Further, known apparatus for providing this type of motion have typically been quite noisy, which is undesirable in a laboratory atmosphere. Along with the problems of reliability, known orbital mixers have not been very precise. The control of these orbital shakers has generally been dependent upon analog circuitry and, accordingly, variations in the speed and control of the time are very difficult to predict because of the variation in the precision of the control circuitry. One area of particular difficulty has been the precision with which the orbital velocity can be controlled because of the analog type circuitry used to drive the apparatus.

One of the uses of such an apparatus has been to move cultures growing in beakers in an orbital motion, such that their interiors will provide an environment for the controlled growth of the cultures. This use requires that the motion imparted to the culture containers be relatively gentle and requires the paths of the containers be substantially circular, so as to produce a uniform agitation. The uniformity of the agitation and control of the velocity are important to maintain the similar growth rates of the cultures from one batch to another and from one container to another in the same batch. Although many of the uses for orbital shakers are in the medical area, other uses are common for these devices and exist throughout areas where agitation is necessary.

An orbital shaker apparatus according to the preamble of claim 1 providing a smooth and reproducible orbital motion for such assays is more fully illustrated in WO 86/00995.

The apparatus comprises a movable tray for supporting articles which are to be agitated such as clinical assays in beakers, flasks, test tubes or the like. The tray is supported by a suspension system which provides support for the loading of the tray with an assay while permitting a cyclic movement in the plane of the tray without undue resistance. The suspension system constrains the tray to move in translational modes only so that there is no rotation of the plane of the tray and every point on the tray subscribes substantially the same path. The translational constraints of the apparatus are provided by a suspension system which suspends the tray from a frame with flexible supports. The flexible supports are constrained so as to be flexible only in one dimension, and permit movement of the tray only along one axis with respect to the frame. The frame is suspended by flexible supports from a plurality of stationary stands so that it is constrained to translational movement along an axis perpendicular to the tray movement axis. The combination of the translational movements of the tray and the frame allow the tray to be moved in any number of precise cyclic or orbital motions. Because all the movement is produced by the bending of the flexible supports, there are no mechanical surfaces to rub together to create noise, friction, or tolerance errors.

A microprocessor based controller is provided to precisely control the speed of the cyclic motion and the duration of the motion. The controller receives a speed set command and a time set command from an operator through an input port and converts these commands into digital values which may be stored in the memory of the microprocessor. The microprocessor includes an interrupt input which receives pulses from an optoelectric sensor at a frequency determined by the actual speed of the motor. The microprocessor calculates the actual speed of the motor by counting the clock pulses during the intervals between pulses. The actual speed of the motor is compared to the stored speed set value and a digital drive signal of one level is output from an output port of the microprocessor if the set speed is less than the actual speed and a second level is output if the set speed is greater than the actual speed. The drive signal turns the motor fully on with one level and fully off with the second level to provide a digital speed control.

The microprocessor in response to a start signal initiates the speed control and stores a reference time from a real time time clock at which the process was started. In addition, the preset duration is compared against the real time clock and the starting value to determine when the requested duration has elapsed. The microprocessor terminates the speed control and stops the apparatus at the end of the duration or when a stop signal is generated.

An advantageous direct drive control is used to impart the cyclic motion to the tray. In the preferred embodiment, a motor has its shaft mounted substantially perpendicular to the plane of the tray. The motor is coupled to the tray by a drive pin which is set eccentric to the shaft on a counterweight to produce a circular orbit around the shaft and thereby a circular orbit of each point on the plane of the tray. This apparatus utilizing a speed control for the motor provides the desired and reproducible gentle agitation of the media for normal shaker operations.

However, in other laboratory or clinical applications a more intense agitation may be required. This mode of operation may be useful for initial mixing or where the assay requires faster dispersion and/or combination between the components in the media. Many processes will be facilitated by such intense agitation as such action will shorten the cycle times necessary for many chemical reactions. Of course, a gentle and smooth transition from start to finish is still required along with precise control of the consistency of the operation, i.e., timing and orbit.

The present invention according to claim 1 is characterised in that said means for inputting is adapted to input data to select a reversing mode of operation; and said microprocessor includes a second output port for outputting a direction signal, and is programmed to respond to the selection of said reversing mode to generate a direction signal from said second output port to cyclically accelerate said electric motor (36) in a first direction of rotation until a predetermined speed is reached, hold said electric motor (36) at said predetermined speed for a set interval of time, decelerate said electric motor (36) until rotation in said first direction stops, accelerate said electric motor in a reverse direction of rotation until a predetermined speed is reached, hold said electric motor (36) at said predetermined speed for a set interval of time, and decelerate said electric motor (36) until rotation in said reverse direction stops.

Thus, a reversing mode of the speed control can be selected by an operator input to the microprocessor. Conveniently the motor is connected to a drive circuit which is adapted to control motion of the motor in either direction based on a bilevel direction signal from the microprocessor. When in the reversing mode, the microprocessor controls the drive circuit and motor control output to cause the motor to increase speed in one direction in a ramp-like fashion until set speed is reached, hold that set speed for a predetermined time, and then ramp the speed down to zero. The speed control then causes the motor to switch rotational direction and thereafter ramp up to another predetermined set speed, hold that set speed for a known interval, and then ramp down to zero again. The cycle is subsequently repeated for the amount of time input in the time set command or until a stop signal is generated.

The reversing mode advantageously increases the mixing of the components of an assay by increasing the possible locations of each component relative to the other components. The reversing mode enhances the mixing action because heavier and lighter components accelerate and decelerate at difference rates thus increasing the mixing and thereby increasing the probability of all molecules of the components commingling with each other in a shorter time period. The speed ramping will cause a differential acceleration while maintaining gentle and reproducible movement of the agitation apparatus. When the apparatus is reversing, the heavier components will overtravel the lighter components and thus add to the dispersion which occurs due to the ramping alone.

Examples of the invention will now be described with reference to the drawings, in which:-

FIG. 1 is a pictorial perspective view of an orbital shaker including a speed control constructed in accordance with one embodiment of the invention;
FIG. 2 is a fragmented top view of the orbital shaker illustrated in FIG. 1;
FIG. 3 is a cross sectional side view of the direct drive mechanism and suspension system of the orbital shaker illustrated in FIG. 1;
FIG. 4 is a partially cross sectional front view of the suspension system of the orbital shaker illustrated in FIG. 1;
FIG. 5 is a detailed electrical schematic diagram of the microprocessor based speed control for the orbital shaker illustrated in FIG. 1;
FIG. 6 is a pictorial representation of the digital code which is produced by the numeric keypad and control keys of the keyboard illustrated in FIG. 5;
FIG. 7 is a system block diagram of the various routines executed by the microprocessor to control the orbital shaker illustrated in FIG. 1;
FIG. 8 is a series of waveform diagrams illustrating the operation of the speed control loop for the shaker apparatus illustrated in FIG. 1;
FIG. 9 is a pictorial representation of motor speed as a function of time for the reversing mode of operation of the orbital shaker illustrated in FIG. 1;
FIG. 10 is a detailed flow chart of the motor reversing mode routine illustrated in FIG. 7;
FIG. 11 is a detailed flow chart of the motor control routine illustrated in FIG. 7; and
FIG. 12 is a detailed flow chart of the motor driver routine illustrated in FIG. 7.

Appendix A is a listing of the system software forming the speed control.

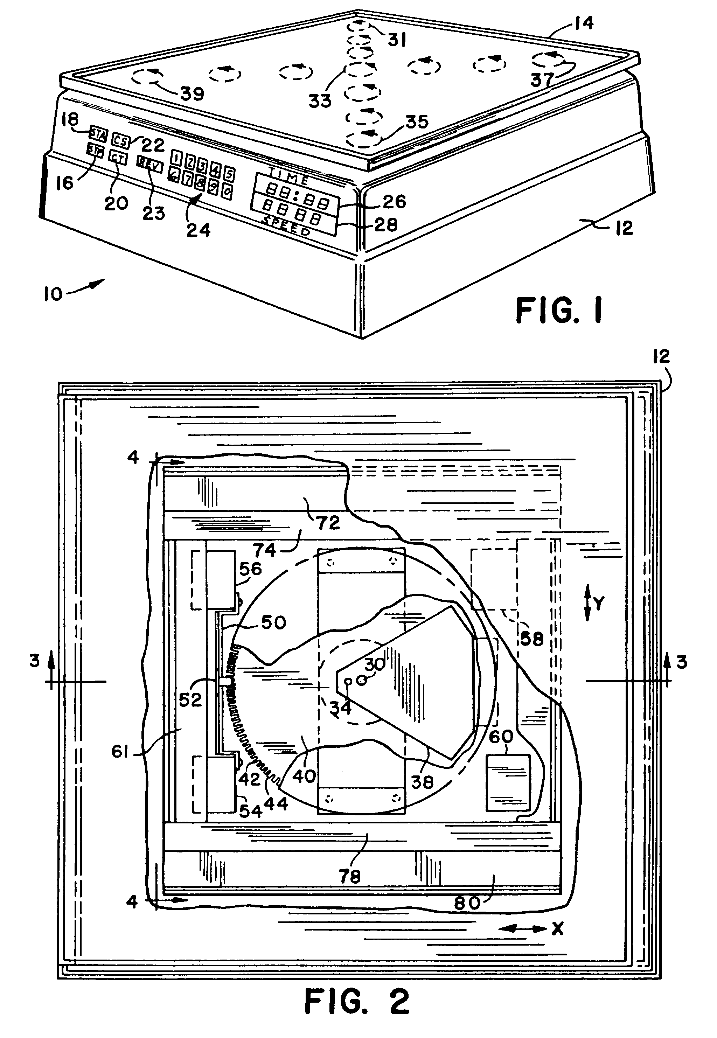

With respect now to FIG. 1, there is shown an orbital shaker 10 including a speed control constructed in accordance with one embodiment of the invention. The orbital shaker 10 comprises a base 12 incorporating means for providing operator inputs including control keys 16-22, 23 and numeric keypad 24. In addition, a display means comprising a time display 26 and a speed display 28 are provided. An operator, by selecting the sequence of control keys and the information input to the displays, causes operation of the apparatus in the manner described hereinafter.

The orbital shaker 10 imparts an exact orbital motion to specimens placed on a tray 14, which in one mode is moved in a prescribed cyclic motion at a particular speed and for a predetermined amount of time. In another mode, the orbital shaker 10 causes tray 14 to be moved in a prescribed cyclic motion at constantly changing speeds with its direction of rotation periodically reversed. One important aspect of the apparatus is to impart the same prescribed cyclic motion at each of the corners 31, 35, 37 and 39 of the tray 14 as that imparted in the middle of the tray 33. This is accomplished by preventing the plane of the tray 14 from rotating and constraining it to move only in a combination of its translational modes. In this manner, uniform agitation for the many assays contained on the tray will be assured.

The motion which will be described with respect to the illustrated embodiment will be an orbital motion of a circular nature. However, it should be pointed out that orbital motions which are not circular, such as elliptical, oval or the like, or even more compound shapes are within the scope of the disclosure. Further, it will be seen that in addition to orbital motion, single axis or plural axis translational movements are available from the apparatus and depend only upon the driving means. All of the above described motions can be produced by the illustrated apparatus with precision and without noise as will be more fully explained hereinafter.

The operator control keys comprise five pushbutton switches 16, 18, 20, 22, and 23. The pushbutton 18 is the start button and, assuming all conditions are clear for initiating motion of the tray 14, pressing this button will initiate the agitation operation. The stop button, control key 16, will cause a termination of the motion of the tray 14 prior to a timeout. Control key 23 is the reversing mode key and pressing it will toggle the apparatus between a set speed mode and a reversing mode.

In general, the operator control keys are used to produce input signals which will cause the apparatus to cyclically move the tray at a set velocity for a predetermined period of time in the set speed mode or at varying velocities for a predetermined time with periodic reversing in the reversing mode. The peak velocity which the operator wishes to produce for either mode is input by pressing the change-speed key 22 and then by entering a four digit numerical value with the 0-9 keys of numeric keypad 24. This velocity set point is then displayed in the four digits of the speed display 28 in revolutions per minute (RPM). The time period for the agitation in the set speed mode or the reversing mode is input to the apparatus by pressing the change-time button 20 and then by entering four numerical values from the keypad 24. This time period is entered into the time display 26 and indicates the amount of time the material in the tray is to be agitated for a particular experiment.

By operating specific combinations of the keys, special functional operations are available. Pressing the change-speed key 22 while simultaneously holding in the 1 or 2 key of the numeric keypad 24 causes the speed of the apparatus to ramp up or ramp down, respectively, while the apparatus is running. Pressing the change-time key 20 while simultaneously holding in the 1 or 2 key causes the digits stored in the time display 26 to be set for hours and minutes in the first instance, and for minutes and seconds in the second instance.

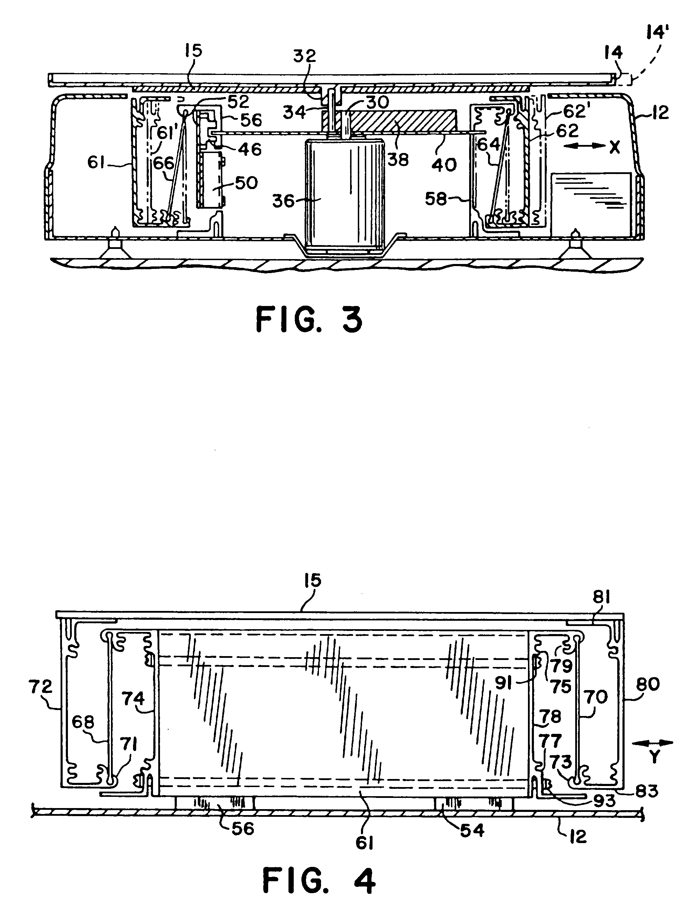

With respect now to FIGS. 2, 3 and 4, the generation of the motion for a circular embodiment of the apparatus 10 will be more fully explained. The motion of the tray 14 is produced by a direct drive including a DC motor 36 (FIG. 3) having a drive shaft 30 substantially perpendicular to the plane of the tray 14. The drive shaft 30 fits into a bore of a counterweight 38 which has an offset or eccentric drive pin 34 substantially parallel to the drive shaft 30. Rotation of the drive shaft 30 by the motor 36 produces an orbit (in the embodiment circular) of the drive pin 34 about the axis of the motor. The drive pin 34 is coupled through a support plate 15 by means of a bushing 32 to the tray 14. This direct drive orbiting of the vertically oriented axis of the motor 36 and the counterweight 38 produce a smooth continuous orbital motion for the tray 14.

The counterweight 38 is generally about one-half of the maximum load that the tray 14 is designed to hold and thus will substantially balance most loads. The counterweight 38 helps align the center of the entire rotational mass (centroid) over the motor axis. Additionally, the counterweight 38 helps overcome the inertia of the load placed on the tray 14, but does not have to overcome the actual weight of the load because the tray 14 is supported by the backing plate 15 which is mounted on suspension means which bear the weight of the load. The direct drive motor 36 is controlled with a closed loop feedback control to produce precise control of the speed of rotation of drive shaft 30, and, thus, tray 14.

In concert with the control, a large slotted disc 40 (FIG. 2) is mounted between the counterweight 38 and the motor 36 and spins with the rotation of the orbit. An optoelectric slot sensor 46 is clamped over the slotted edge portion of the disc 40 and produces a changing level signal for every passage of a slot, for example 42, 44. The optoelectric sensor 46 is mounted on a strip mount 52 which is fixed to a U-shaped support bracket 50 connected between two stationary support stands 54 and 56.

As better seen in FIGS. 2, 3 and 4, support for the weight of the tray 14 is provided by a generally rectangular frame which is supported at its corners by support stands 54, 56, 58, and 60, which are fixedly secured to the base 12. The frame comprises four generally channel shaped elements 61, 62, 74 and 78 assembled in a rectangular box around the support stands 54, 56, 58 and 60.

The backing plate 15 is suspended on this frame by means of four flexible connections which couple the frame to a backing-plate hanger 72 and backing-plate hanger 80 extending substantially parallel and longitudinally across opposite ends of the backing-plate 15. The hangers 72, 80 are additionally generally channel shaped in cross section and include a mounting means 71 with a slot opening to a narrow neck which is adapted to retain a bead. Coupling the backing-plate supports 74 and 78 to the backing-plate hangers 72 and 80 are flexible links 68 and 70, respectively. Therefore, the backing plate 14 is constrained to move in only one direction, referenced as Y in FIG. 4, with respect to the frame.

In a similar manner, the support frame is suspended from the anchored stands 54, 56, 58 and 60. As better viewed in FIG. 3, the stands 56 and 58 provide support for hanger elements 61 and 62, respectively. The coupling between the stands and the hanger elements are provided by flexible links 64 and 66 similarly constructed to the flexible links 68, and 70. Therefore, the inner or support frame is constrained to move in only one direction, referenced as X in FIG. 3.

Combinations of the transtational movements of the support plate and the frame provide orbital motion of the tray 14 with respect to the base 12. This orbital motion is provided without allowing the tray to rotate in its plane thereby preventing different accelerations depending upon a position on the tray. All assays at any position on the tray are moved with the same motion.

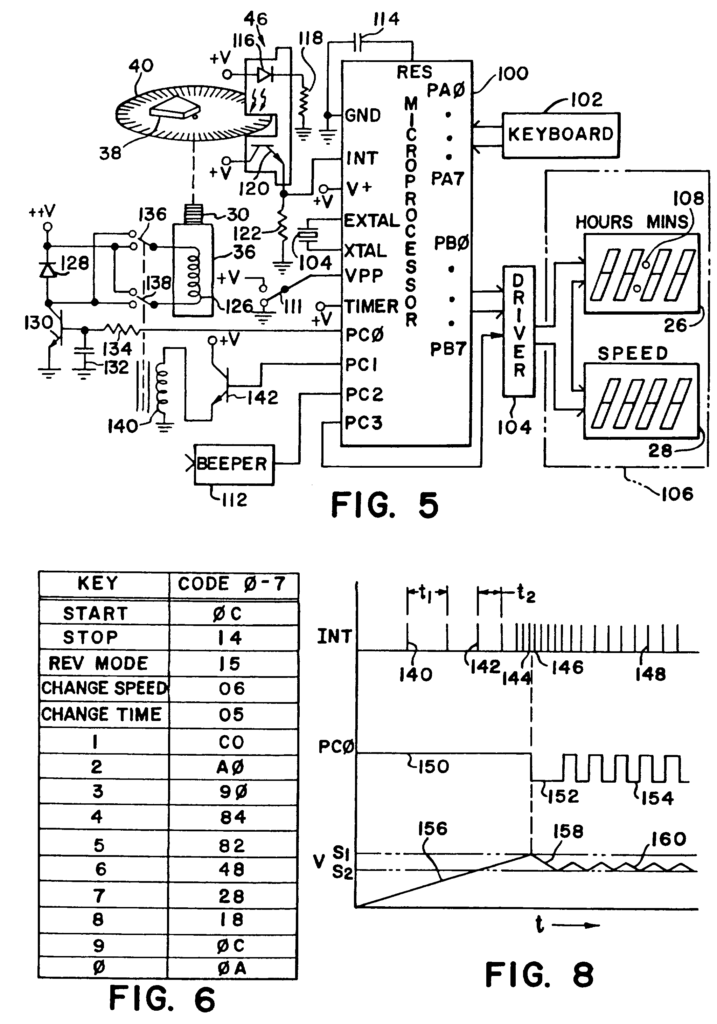

In FIG. 5 there is shown an electrical schematic diagram illustrating a microprocessor based speed control for the orbital shaker apparatus 10. A microprocessor 100 receives the inputs from the control keys 16-23 and numeric keypad 24 forming a keyboard 102, via its port A lines PA0-PA7. The operator by pressing keys on the keyboard 102 thereby inputs commands and information for the different functions of the system. The microprocessor 100 through port B lines, PB0-PB7, and a port C line, PC3, communicates with the display means 106 via a driver circuit 104. The driver circuit 104 controls the specific elements of the seven segment displays which are lit up relative to the data that is transmitted. The driver circuit 104 controls both the time display 26 and the speed display 28 of the display means 106.

One basic function of the microprocessor 100 is to provide a closed loop control for the orbital speed of the tray 14. It accomplishes this function by providing a logic level motor control signal from the C port line, PC0. This motor control signal is transmitted through a filter, comprising a resistor 134 and a capacitor 132, to the base of a drive transistor 130. The drive transistor 130 is an NPN power transistor having its collector tied to one terminal of the motor coil 126 and its emitter terminal connected to ground. The other terminal of the motor coil 126 is connected to a source of drive voltage ++V. A diode 128 is paralleled with the motor coil 126 such that when the transistor 130 switches off the inductive energy will be dissipated in the diode.

The microprocessor 100 produces a digital signal output on the control line PC0 which is amplified by the power transistor 130 to switch the motor coil 126 either fully on or fully off. This type of on/off control, typically termed a "bang-bang" type of speed control causes the motor to accelerate at a maximum rate provided by the voltage ++V when the transistor 130 is on and to freewheel or decelerate when the transistor is off. The filter comprising resistor 134 and capacitor 132 rounds the edges of the square wave to provide a smooth transition between the switching levels. The control signal PC0 is switched on in response to a state where the actual motor velocity, is below a desired velocity and is switched off in response to the actual motor velocity being in excess of a desired velocity.

The actual velocity of the motor is determined by the microprocessor 100 through the input of an actual speed signal to its interrupt terminal INT. The signal is generated by the optoelectric sensor 46 which senses the discontinuities in the slotted disc 40 to provide the interrupt signal. The optoelectric sensor includes a IR emitting diode (IRD) 116 which is connected between a source of positive voltage +V and ground via a resistor 118. The optoelectric sensor 46 further includes a phototransistor 120 mounted on the other side of the disk 40. The phototransistor 120 is of the NPN type and is connected by its collector to a source of positive voltage +V and by its emitter to ground through a resistor 122.

Normally, the emission of IRD 116 is blocked by the disk 40 from the photo-receptive base area of the phototransistor 120. When a slot in the disc 40 appears in the channel between the IRD and phototransistor 120, the transistor receives emissive radiation from the IRD 116 and begins to conduct current. This conduction will produce a voltage on resistor 122 which is interpreted as an interrupt by the microprocessor 100. The microprocessor 100 by determining the time between the interrupt pulses can thereby calculate the actual velocity of the motor.

Bidirectional control of the rotation of the motor 36 is provided by a relay having switching contacts 136 and 138 and solenoid coil 140. The relay contacts 136 and 138 are connected as a double pole, double throw switch between the motor coil 126 and two sets of contacts paired an either side of the diode 128. The solenoid coil 140 is connected between the emitter of an NPN power transistor 142 and ground. The power transistor 142, whose collector is tied to a positive voltage +V and whose base is tied to the port C output PC1, causes current to flow through the solenoid coil 142 when the transistor is conducting. The transistor 142 is operated by a high level logic output from the port C output line, PC1, of the microprocessor 100 thereby causing the relay to switch the contacts 136, 138 from one set to the other. When the contacts are switched, current flows in the opposite direction to that previously in coil 126 thereby reversing the direction of rotation of the motor 36.

The microprocessor 100 by controlling the logic levels on the port C output lines, PC0, PC1 determines whether the motor 36 is off or on and, if on, the direction of its rotation. In the illustrated embodiment a high level logic signal on PC0 turn the motor 30 on and a low level logic signal turns the motor off. A high level logic signal on output line PC1 causes the motor 36 to turn in a clockwise direction and a low level logic signal causes the motor to turn in a counter-clockwise direction.

The microprocessor 100 also controls a beeper 112 with an on/off logic level signal generated by the port C control line, PC2. The beeper 112 is used as an audio feedback to alert various conditions, such as pressing any key, an error, or upon the end of the time cycle. The microprocessor 100 contains a programmable read only memory which can be programmed with the system program. A programming terminal Vpp is connectable by a switch 111 to either ground or a source of voltage +V. The programming pin Vpp provides a means for changing the jumper 111 to allow for different models of microprocessors. A microprocessor of the type shown is commercially available from the Motorola Corp. of Schaumburg, Illinois as Model No. MC68705P3 or MC6805P3.

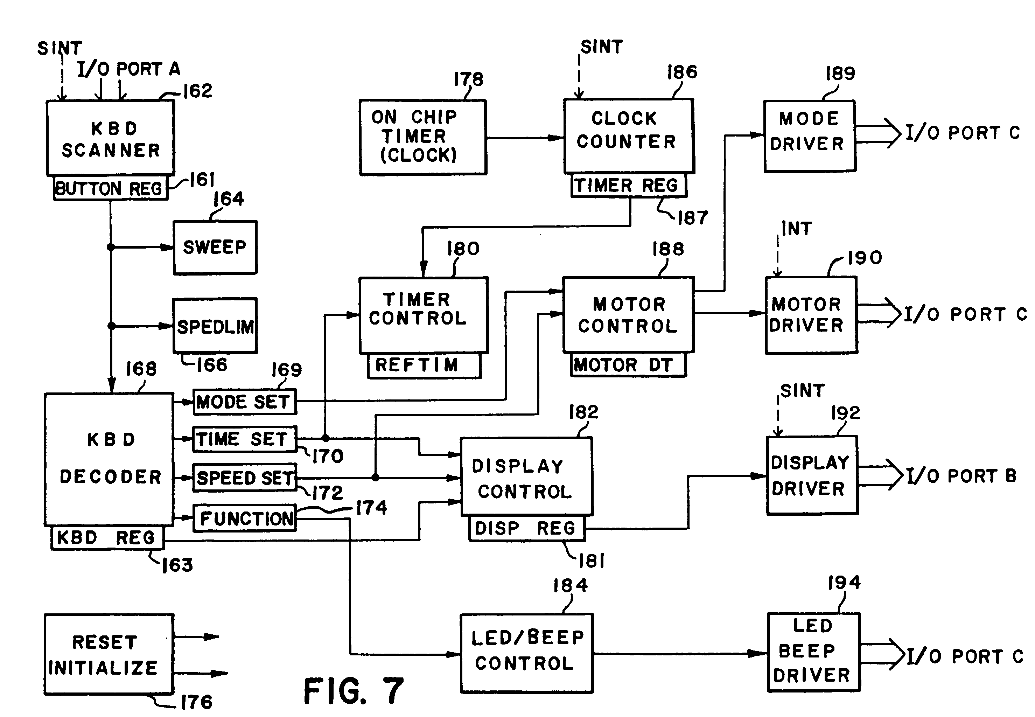

A block diagram of the system program which is executed by the microprocessor 100 is more fully disclosed in FIG. 7 where a keyboard scanner subroutine 162 scans the port A inputs PA0-PA7. The button register 161 of the keyboard scanner routine 162 is used to intermediately store the codes coming in from the keyboard 102. Each keyboard key has a separate 8-bit code as is illustrated in FIG. 6 which can be decoded by a keyboard decoder routine 161. The sweep routine 164 monitors the button register 161 and allows the operator to "sweep" or change the set speed of the motor during operation. The speed limit routine 166 monitors the button register 161 and prevents the selection of speeds greater or less than those allowable.

After the bit combinations are decoded by the keyboard decoder routine 168, they are stored in a keyboard register 163. The keyboard decoder routine 168 passes variables as a result of its decoding to a mode set register 169, a time set register 170, a speed set register 172, and a function register 174. The mode set routine 169 receives input through the keyboard scanner routine 162 and keyboard decoder routine 168 to determine if the apparatus is to be run in the set speed mode or the reversing mode.

The time set register 170 stores a binary representation of the length of time the operator desires the apparatus to run. This time value is made available to a display control routine 182 and to a timer control routine 180. The display control routine 182 through a display register 181 will use the set time to control a display driver routine 192 which produces a display of the time period remaining for a particular assay in the seven-segment display 26 through port B. Further, the time period is made available to the timer control routine 180 so that the routine can be used with the combination of a real time clock 186 to determine precisely the amount of time that a certain assay should be run.

The speed set register 172 receives numeric information from the keyboard 102 through the keyboard scanner routine 162 and the keyboard decoder routine 168 and contains a speed value for the angular velocity of the orbital shaker during an assay. The routine makes this information available to the display control routine 182 which, through the display register, drives the seven-segment LED display 28 via port B to display this information. The speed set register 172 is responsive to the control key change-speed 22 and the numerical sequence which follows it.

A function register 174 receives input through the keyboard scanner routine 162 and keyboard decoder routine 168 and provides test and default information. If there are numeric sequences which the keyboard decoder routine 168 does not recognize, values which are out of bounds for the apparatus, or inputs other than those acceptable, default and error bits will be generated. In response to these default and error conditions, the function register 174 provides information to a LED/BEEP control routine 184. This control routine produces variables which can be used to drive the LED/BEEP driver 194 through port C. When errors or faults occur, the beeper 112 can be driven by the LED/BEEP control routine 184 to alert the operator of the condition. Further, for defaults of invalid operational values, the displays 26, 28 are made to flash with the LED/BEEP control routine 184.

The start and stop button keys cause the keyboard scanner and the keyboard decoder routines 162, 168 to produce a zero time set and a zero speed set, in the case of the stop button, and to start the timer control 180 and motor control 188, in case of the start button. The reset and initialize routine 176 is used once only during power up to produce an initialization of the variables used and start the other programs, to produce a definition of particular constants, and to load certain registers.

An on chip hardware timer 178 on the microprocessor chip 100 produces pulses at a predetermined clock rate which can be sensed by the clock counter routine 186 to maintain a real time clock. The real time clock can produce a reference time for the starting point of a count down for a particular test period by transfer of that reference time to the timer control routine 180. Further, the timer control 180 can interrogate the time set register 170 for the duration of a particular test. In response to the start button, the timer control routine 180, thereafter counts down the test duration and when there is a time out transfers this information to the motor control routine 188.

The motor control routine 188 by determining when a timeout occurs, discontinues the agitation operation. The motor control routine 188 also receives the speed set information and provides a signal indicative of the selected speed of the motor. Based on these variables, the motor control 188 produces information which can be transferred to a motor driver routine 190 to control the operational state of the motor through port C. Additionally the motor control routine 188 receives the mode information from the mode set routine 169 to control the direction of the motor 36 through mode driver routine 189 and port C.

Illustrated in the following Appendix A is the listing of the main monitor loop which calls the routines shown in FIG. 7. Lines 05FE-0613 are the instructions forming the reset and initialize routine 176. It is seen that subroutines RCLKSPD, RCLKCNT, RDISDRV, RKEYSCN and RKBDDEC are called in order during the start up or upon the reset of the system. RCLKSPD resets the clockspeed of the on chip timer 178; RCLKCNT resets the timer register 187 in the clock counter routine 186; RDISDRV resets the display driver routine 192; RKEYSCN resets the keyboard scanner routine 162, and RKBDDEC resets the keyboard decoder routine 168. After the control routines have been reset, the main monitor enables the interrupt at line 0610 and then enters a monitor loop which will be constantly executing while the program is running.

The main loop consists of calling the ten listed subroutines at lines 0614-062F. First KBDDEC, the keyboard decoder routine 168, is called. Thereafter, DISPCON and TIMCON, the display control routine 182 and the timer control routine 180, respectively, are called. In succession, SWEEP, the acceleration and deceleration routine 164; CKMODE2, the reversing mode control routine; AUTOSTP, the automatic stop routine; and MOTOR, the motor control routine, 188 are called. This group comprises the main control routines for the keyboard input, motor control, and display control. Next in the main loop BEEP, the LED driver and BEEP control routine 184, is called. CLKSPED, the clock speed set routine is called next, and is followed by COLON to light the diodes between the time digits. This is the basic program loop which receives and generates the necessary information for running the system.

In addition to the main loop, the program has a group of routines which are executed on a timed basis. The microprocessor 100 has provisions for setting a software interrupt SINT which transfers control of the program from the main loop to the interrupt handling routine TIMINTR at line 0631. It is here that the routine CLKCNT, the clock counter routine 186; KEYSCN, the keyword scanner routine 162; and DISDRV, the display driver routine 192 are called periodically. In the present system, the software interrupt is generated 256 times per second.

The hardware interrupt from the speed sensor takes precedence over the software interrupt and calls the motor driver routine 190 to control the speed of the apparatus. After execution of the motor driver, the microprocessor 100 will either return to the main monitor loop or service the software interrupt, if it is waiting.

Therefore, the execution sequence of the program is once through the initializing routine upon startup or reset and then to the main monitor routine for constant execution. The execution of the monitor routines are interrupted by the software interrupt every 256 times per second, and by the hardware interrupt at times depending upon the speed of the motor. After the interrupts have been serviced the program returns to the execution of the main monitor until stopped.

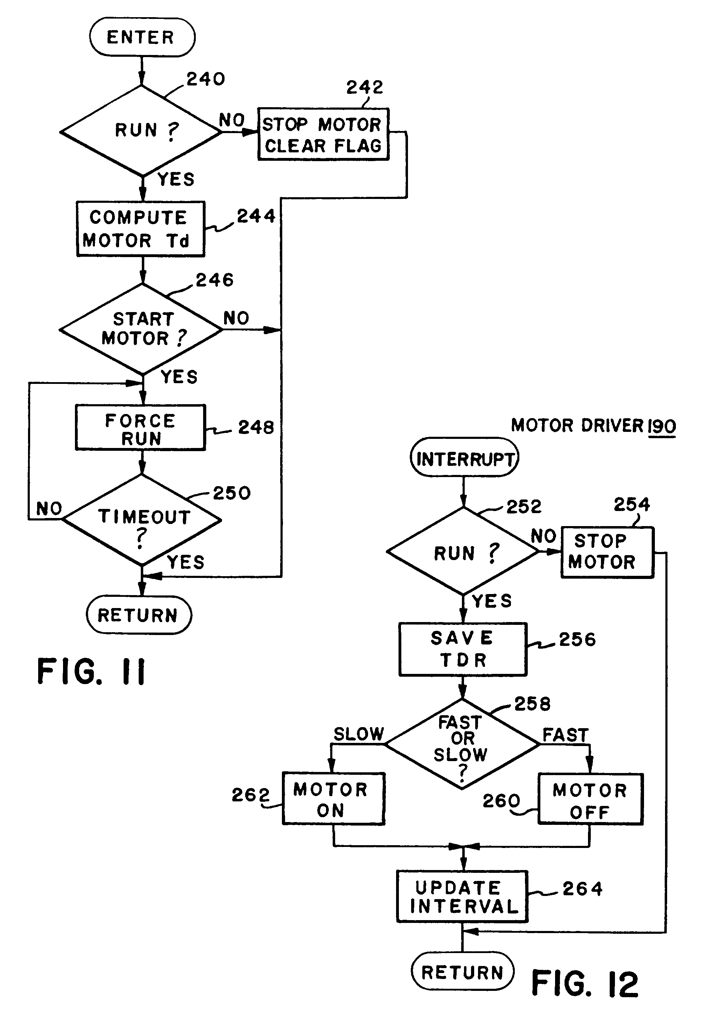

FIGS. 11 and 12 illustrate detailed flow charts for the motor control routine 188 and motor driver routine 190, respectively. The program listings for these programs are found in Appendix A. Initially, in FIG. 12, the motor control routine 180 reads the bit in common storage where a run flag has been stored in block 240. If the run flag is set, then the program will branch to block 244. If the run flag has not been set, the motor will be stopped by functional block 242 and the run flag cleared. Thereafter, the program will return to the processing of input data from the keyboard and its main loop monitor functions.

When a run flag is detected, the number of clock counts for the speed set point of the motor will be computed in block 244. Next, the program will determine whether the motor is to be started at this time by interrogating a location in memory which indicates whether this is the first time through the program. If not, the program returns, but otherwise, if all conditions are ready for the motor to be started, the motor is forced to run for a short time in block 248. Decisional block 250 will determine if there has been a timeout. A timeout will cause the motor control routine to terminate and return control to the main monitor routines.

The motor driver routine 190 begins in block 252 of FIG. 12 and is essentially a speed control loop called by the hardware interrupt produced from the optoelectric sensor 46. The first block determines whether the run flag is set and, if not, the motor is stopped in block 254 and the program returns to the monitor routines. If the run flag is set, then in block 256 the program reads the real time clock to obtain an indication of the number of clock counts since the last interrupt. This time is stored in the variable TDR. In block 258, the actual time in clock counts is compared to the set time, computed as DT in block 244, to determine whether the motor is operating either too fast or too slow. If the motor is operating too slowly, the program will branch to block 262 where the motor control signal is set to a level which will turn the motor fully on. In the alternative, if the motor is already going faster than the set point, then the control signal is turned off by block 260.

After the control signal has either been set on or off, the separate branches of the program consolidate at block 264 where the reference for the selected time interval is updated. The variable is updated from the motor control routine by adding the time period Td. The program then returns to the location in the monitor routine where the microprocessor was executing prior to the interrupt after performing its control and updating functions. The loop process continues until the next interrupt is generated as previously indicated.

To visualize the manner in which the microprocessor 100 makes the decision whether to turn the motor control signal on or off, consider that the selected or set point speed can be converted into a desired time interval Td based upon the microprocessor clock rate and the slot densities of the disk 40. First calculate a constant K which is the number of clock counts of a high speed clock between each slot in the disk at 1 RPM.

$$K = \frac{Nc \times 60 \text{ sec}/1 \text{ min}}{N}$$

where

Nc =    the microprocessor clock rate, for example, 65,536 Hz.

N = number of slots on the disk - for example 180 for a disk with 2° slot increments.

K = 21,845 counts

Now for any selected speed V(SEL) in RPMs, the desired time interval Td, expressed as the number of clock counts between two slots is

$$Td = \frac{K}{V(SEL)\ RPM}$$

For a speed range of 40 to 240 RPMs, Td becomes

Td(40) = 546 counts

Td(240) = 91 counts

Upon receiving a change speed command, the set speed entered is converted into the variable Td and stored.

The microprocessor 100 when it receives a hardware interrupt begins a counter clocked at the 65,536 Hz. frequency. When the next interrupt pulse appears, the microprocessor stores the clock count Tf for use as the actual speed.

Now the variable X is calculated as

Tf - Td = X

if X > 0 then turn the motor off

if X < 0 then turn the motor on

The controller uses the interval comparison as a convenient and accurate method of controlling the speed of the motor. Since the interrupts occur every 2° of rotation for the motor, the actual speed is calculated 180 times per revolution providing an accurate comparison standard. The program loop for the actual control is additionally executed quickly and permits many control iterations per revolution. The loop is executed in its simplest form by reading two constants, one from the timer register for the actual speed of the motor and the other from memory for the set speed of the motor and then doing the comparison and test steps. The tests and output control signal commands can be accomplished in the same iteration.

At line 05C3 of the motor driver routine, the value of the real time clock, TDR, is saved to memory location SAVETDR. This value is compared to a reference time variable REFTIML, REFTIMH at lines 05CB-05D1 to determine which is greater than the other. The motor control signal is set, as discussed previously, based upon the comparison. Thereafter, the number of clock pulses which should be seen at the selected speed between two interrupts is added to the reference time variable. Thus, for every cycle through the routine the reference time variable is incremented by an incremental clock count MTRDT based on what should be the correct number at the selected speed. This total number should equal the real time clock number TDR if the speed is that desired. If the motor is slow and cycles are being lost then the motor is speeded up until both are equal. If the motor is fast and cycles are being added then the motor is slowed down until both are equal. A speed control for the set speed mode has thus been disclosed.

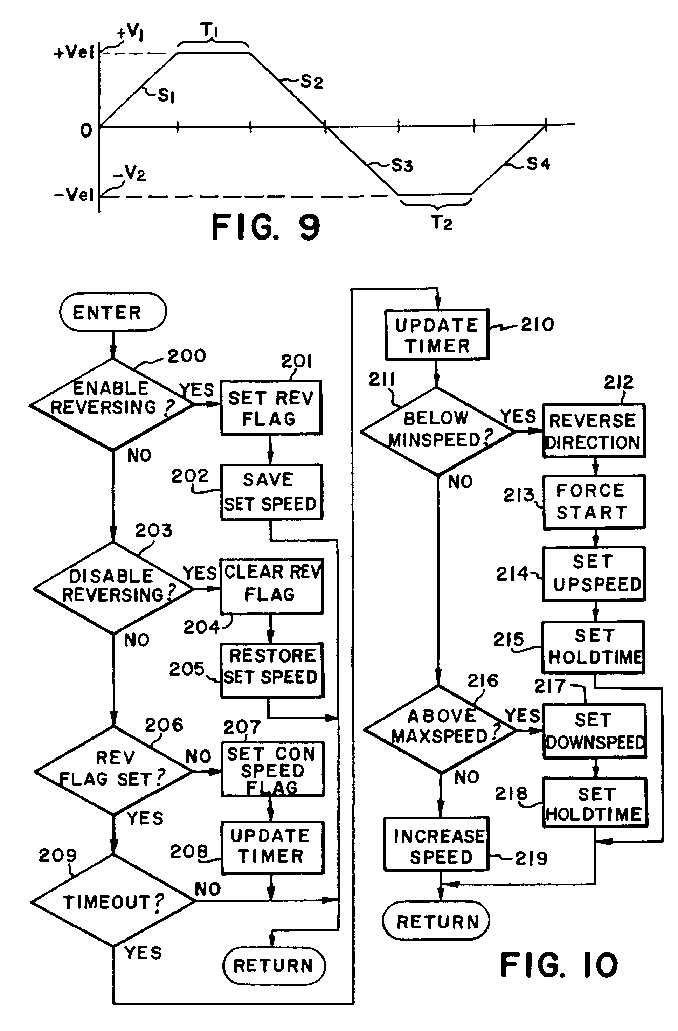

Waveform diagrams for a control operated in this manner are illustrated in FIG. 8 where the interrupt pulses from the optoelectric sensor are illustrated as the waveform INT. The motor control signal, output to the drive transistor 130 (FIG. 5), is shown as the waveform labelled PC0. The velocity profile for the motor speed as a function of time is shown in the waveform labelled V where speed set point S1 and speed set point S2 will be used to explain operation of the control.

At the start of an interval, the operator has previously input a time duration over which the agitation will occur. As further input, a speed is set at which he desires the test or agitation to occur, in the example S1, initially. The operator presses the start button and the control thereafter will bring the shaker up to the set point speed and maintain it at that speed precisely for the duration of the interval. The motor starts at rest and therefore the control signal PC0 is set to a high level indicating that the motor is running slower than the set point velocity. This function is provided by the motor control routine forcing the interrupts to occur at a motor start so that the motor drive routine can take control.

In response to the high level of the PC0 signal labelled 150, the velocity will begin to ramp at a particular rate shown by the slope of the velocity level 156. As time passes, this velocity level will approach the set point S1 and finally exceed it. When the control senses that the actual velocity has exceeded S1, then the control signal PC0 is set to a low logic level as illustrated at 152. Turning off the drive signal to the motor causes it to freewheel and the velocity to fall at a characteristic slope as shown by 158.

Let us assume at the point which the velocity V exceeds S1, that the set point is changed to S2. The velocity V will therefore, decrease until the motor has slowed to a value below S2 at which time the control signal C0 will again be set to a high logic level. Thereafter, the actual velocity exceeds or slows below or above the set point S2, the control signal will oscillate in the opposite manner to provide a limit cycle based upon the two slopes 156 and 158 as shown at 160, FIG. 8.

It is seen that the interrupt signal INT provides a method for determining when the actual velocity V crosses the set point. During the initial acceleration part of the speed cycle (slope 156) the INT pulses begin to come at a higher frequency where two successive pulses 140 and 142 are closer together than the previous two successive pulses. It is seen that at the highest velocity the pulses are the closest together at 144. The pulses then begin to spread out and lower in frequency as the motor slows because of the low logic level on the signal line C0 as seen at 146 which corresponds to slope 158. Thereafter, when the controller reaches a limit cycle at 160 the corresponding interrupt pulses at 148 are relatively equal in spacing.

This type of controller is termed a "bang-bang" type control where the slope 158 for deceleration is substantially different than the slope for acceleration. This is caused by the manner in which the motor is controlled by the control signal C0 and the configuration of the motor including the counterweight. The acceleration slope is determined by the full on drive produced by the control when the motor speed is less than the set point. The motor speed then coasts down when the drive is turned at a rate determined by the flywheel effect of the counterweight. This produces an advantageous control which may precisely maintain the speed of the rotation for the specimen tray 14 within ±1% of set point over a range of between 40 and 250 RPM.

FIG. 9 illustrates the waveform of the velocity of the motor 36 as a function of time for the reversing mode. When the apparatus is placed into the reversing mode the cycle shown in FIG. 9 is repeated for the number of hours and minutes, or minutes and seconds, set by the operator during the change-time operation. From a standing start the program will accelerate the apparatus along a slope $S_1$ at a substantially constant speed until it reaches a maximum velocity $+ V_1$, at which time that speed will be held for a time $T_1$. After the predetermined time $T_1$ has expired, the velocity of the apparatus will be ramped down according to a constant slope $S_2$. The slope will thereafter, continue until the speed of the apparatus is substantially zero, at which time the motion is reversed and the motor 36 is accelerated in the opposite direction at a constant slope $S_3$. When the apparatus reaches a maximum velocity $-V_2$, it is held at that velocity for a predetermined time $T_2$. Thereafter, the motor is ramped from the velocity $-V_2$ toward zero at a constant slope $S_4$. Once the apparatus reaches substantially zero velocity the cycle repeats.

In this manner a constant agitation is provided by the continuously changing velocities along the slopes $S_1$, $S_2$, $S_3$, and $S_4$. Further a reversal of the directions of the motor provides overtravel for mixing the higher and lower weight components. In this manner two extra mechanisms of agitation are added to the constant velocity rotational agitation provided at the set speeds during time periods $T_1$ and $T_2$. While the cyclical operation during reversing mode shows slopes, time periods, and reversing set point velocities which are equivalent, there is no necessity that any of these parameters must be equal. For example, $S_1$ can be different from $S_2$, $S_3$ and $S_4$. $S_2$ can be different from $S_3$ and $S_4$, and $S_3$ can be different from $S_4$, etc. Similarly $T_1$ does not have to equal $T_2$ nor does $+V_1$ have to equal $-V_2$. In fact with the motions described for the motor drive routine, it is seen that the motor ramps up at a fairly rapid slope and the freewheels down to zero upon decelerations.

With respect to FIG. 10 the reversing mode routine will now be more fully described by the operations performed in the flow chart of the figure. When the reversing mode routine is called, it first checks the reversing mode input in block 200 to determine if the reversing mode is to be enabled. If the reversing mode is to be enabled an affirmative branch from block 200 calls blocks 201 and 202 where the reversing flag is set and the set speed is saved in a temporary register, respectively. The program then returns until the next time period. If the reversing mode is not enabled and the next test in block 203 is to determine if it is to be disabled on this pass through the program. An affirmative branch from block 203 causes the execution of blocks 204 and 205 where the reversing flag is cleared and the set speed, stored in the temporary register in block 202, is restored, respectively. The program then returns until the next pass of the main program loop.

In block 206 after determining that the switch settings are not to be handled, the program in block 206 determines if the reversing flag has been set. If the reversing flag has not been set then in block 207 the constant speed flag is set and the timer is updated in block 208 before exiting the routine. However, if the reversing flag has been set then in block 209 the program checks for a time out. If there has been a timeout, then the timer is updated in block 210 before continuing to the reversing speed control. If a timeout has not occurred then the program immediately returns and waits for the timeout.

After updating the timer in block 210 subsequent to a timeout the program checks in block 211 to determine if the motor speed is below the minimum speed. This minimum speed is set very close to zero such that the program will be able to determine when to reverse directions. If the speed is below the minimum speed then the program will reverse directions of the motor in block 212 by changing the logic level on port C line PC1. Thereafter, the program in block 213 forces the motor to start or run and the variable upspeed in block 214 is set to indicate the direction of the ramp. Further, in block 215, the hold time for the constant speed intervals at times $T_1$ and $T_2$ is set. The program then exits.

Conversely, if the operation of the motor is not below the minimum speed then the program determines if it is above the maximum speed in block 216. If the motor velocity is not above the maximum speed then in block 219 the speed is increased by an increment or the slope of the particular direction the motor is increasing in. Once the velocity of the motor increases above the maximum or set speed, it is held for the hold time and then during a particular pass through this program the affirmative branch from block 216 will continue the program in block 217. At this point the program will set the direction of the ramp to the downspeed direction and again set the hold time for when the program will reach the predetermined set speed for times $T_1$ and $T_2$.

## APPENDIX A

```
05FE        INITAL      LDAI  $FF
0600                    STAD  PCDDR
0602                    JSRE  RCLKSPD
0604                    JSRE  RCLKCNT
0607                    JSRE  RDISDRV
060A                    JSRE  RKEYSCN
060D                    JSRE  RKBDDEC
0610                    CLI              /ENABLE INTERRUPT
0613                    BSET0 FUNREQ     /BEEP
0614        LOOP        JSRE  KBDDEC
0617                    JSRE  DISPCON
061A        ON          JSRE  TIMCON
061D                    JSRE  SWEEP
0620                    JSRE  CKMODE2
0623                    JSRE  AUTOSTP
0626                    JSRE  MOTOR
0629                    JSRE  BEEP
062C                    JSRE  CLKSPED
062F                    JSRE  COLON
0632                    BRA   @LOOP
0634        TIMINTR     JSRE  CLKCNT
0637                    JSRE  KEYSCN
063A                    JSRE  DISDRV
063D                    RTI
063E        RCLKCNT     EQU   $4E0
063E        CLKCNTH     EQU   $4E7
063E        RDISDRV     EQU   $470
063E        DISDRV      EQU   $479
063E        RKEYSCN     EQU   $237
063E        KEYSCN      EQU   $242
063E        RKBDDEC     EQU   $270
063E        KBDDEC      EQU   $270
063E        DISPCON     EQU   $430
063E        TIMCON      EQU   $500
063E        SWEEP       EQU   $540
063E        AUTOSTP     EQU   $400
063E        MOTOR       EQU   $580
063E        BEEP        EQU   $1AB
063E        COLON       EQU   $200
063E        RCLKSPD     EQU   $D0
063E        CLKSPED     EQU   $D5
05C0        MTRDRV      LDAD  TDR        /SAVE TDR
05C2                    COMA
05C3                    STAD  SAVETDR
05C5        RUNCHK      LDAD  FUNREG
05C7                    AND   I $80
05C9                    BEQ   @OFF.
05CB        COMPUTE     LDAD  REFTIML    /FIND
05CD                    SUBD  SAVETDR    /ERROR
05CF                    LDAD  REFTIMH
05D1                    SBCD  TIMERL
05D3                    BPL   @OFF
```

```
05D5    ON          BSET0   PCDATA      /SPEEDUP
05D7                BRA     @UPDATE
05D9    OFF         BCLR0   PCDATA      /SLOWDOWN
05DB    UPDATE      LOAD    SAVETDR
05DD                ADDD    MTRDTL
05DF                STAD    REFTIML
05E1                LDAD    TIMERL
05E3                ADCD    MTRDTH
05E5                STAD    REFTIMH
05E7                RTl
05E8    FUNREG      EQU     $23     .
05E8    TIMERL      EQU     $2B
05E8    SAVETDR     EQU     $30
05E8    REFTIMH     EQU     $31
05E8    REFTIMH     EQU     $32
05E8    MTRDH       EQU     $33
05E8    MTRDH       EQU     $34
0578    MOTOR       LDAD    FUNREG      /RUN?
0580                ANDI    $80
0582                BEQ     @STOP
0584                LDAD    SPEDSET
0586                BEQ     @STOP
0588    COMPUTE     STAD    MD
058A                LDXI    HIFACTR
058C                LDAI    LOFACTR
058E                JSRE    DIV
0591                CLRX                /TIMES 4
0592                LSLA
0593                ROLX
0594                LSLA
0595                ROLX
0596                STAD    MTRDTL
0598                STAD    MTRDTH
059A    START       TSTD    FLAG
059C                BNE     @EXIT
059E                INCD    FLAG
05A0                LDAD    TIMERLO
05A2                ADDI    $40         /START DELAY
05A4    LOOP        BSET0   PCDATA
05A6                CMPD    TIMERLO
05A8                BNE     @LOOP
05AA                RTS
05AB    STOP        BCLR0   PCDATA
05AD                CLRD    FLAG
05AF    EXIT        RTS
05B0    FUNREG      EQU     $23
05B0    SPEDSET     EQU     $29
05B0    TIMERLO     EQU     $2B
05B0    MTRDTH      EQU     $33
05B0    MTRDTL      EQU     $34
05B0    FLAG        EQU     $35
05B0    DIV         EQU     $95
05B0    MD          EQU     $10
05B0    HIFACTR     EQU     $15
05B0    LOFACTR     EQU     $55
```

```
0540        SWEEP        LOAD  FUNREG      /RUN
0542                     ANDI  $80
0544                     BEQ   @DONE
0546                     LOAD  TIMERLO     /TIMEOUT?
0548                     SUBD  TREF
054A                     ANDI  $FC
054C                     BNE   @DONE
054E                     LOAD  TIMERLO     /UPDATE
0550                     ADDI  $08
0552                     STAD  TREF
0554        UPCHK        LOAD  BUTTON
0556                     CMPI  UPCODE
0558                     BNE   @DWNCHK
055A                     LDAI  $F0         /240?
055C                     CMPD  SPEDSET
055E                     BEQ   @DONE
0560                     INCD  SPEDSET
0562                     RTS
0563        DWNCHK       CMPI  DWNCODE
0565                     BNE   @DONE
0567                     LDAI  $28         /40?
0569                     CMPD  SPEDSET
056B                     BEQ   @DONE
056D                     DECD  SPEDSET
056F        DONE         RTS
0570        BUTTON       EQU   $22
0570        FUNREG       EQU   $23
0570        SPEDSET      EQU   $29
0570        TIMERLO      EQU   $2B
0570        TREF         EQU   $36
0570        UPCODE       EQU   $A5         /C-SPEED&2
0570        DOWNCODE     EQU   $C5         /C-SPEED&1
```

```
0000        CKMODE2     LDAD BUTTON
                        CMPI RUN 2
                        BNE @CKMODE1
                        BSET3 FUNREG        /SET FLAG
                        LDAD SPDSETL        /SAVE SPEED
                        STAD SAVSPDL
                        LDAD SPDSETH
                        STAD SAVSPDH
                        RTS
            CKMODE1     CMPI RUN1
                        BNE @CKFLAG
                        BCLR3 FUNREG        /CLEAR FLAG
                        LDAD SAVSPDL        /RESTORE SPEED
                        STAD SPDSETL
                        LDAD SAVSPDH
                        STAD SPDSETH
                        RTS
            CKFLAG      LDAD FUNREG
                        ANDI $88            /RUN & FLAG
                        CMPI $88
                        BEQ @CKTIME
                        BCLR1 PCDATA        /SET CW ROTATE
                        LDAD TIMERLO        /UPDATE TIMER
                        STAD REFTIM
                        RTS
            CKTIME      LDAD TIMERLO
                        SUBD REFTIM
                        BMI @EXIT
            UPDATE      LDAD TIMERLO
                        ADDI DELAY
                        STAD REFTIM
            MINCHK      LDAD SPDSETL
                        SUBI MINSPDL
                        LDAD SPDSETH
                        SBCI MINSPDH
                        BGT @MAXCHK
                        LDAD PCDATA         /REV DIRECTION
                        ANDI $02
                        BCLR1 PCDATA
                        BEQ @AHD1
                        BSET1 PCDATA
            AHD1        CLRD STRTFLG        /FORCE START
                        CLRD BUMSPDH        /SET UPSPEED
                        CLRD BUMSPDL
                        INCD BUMSPDL
                        LDAD REFTIM         /SET HOLD TIM
                        ADDI HOLDTIM
                        STAD REFTIM
                        RTS
            MAXCHK      LDAD SAVSPDL
                        SUBD SPDSETL
                        LDAD SAVSPDH
                        SBCD SPDSETH
                        BGT @BUMPSPD
                        LDAD $FF            /SET DWNSPEED
```

```
                    STAD  BUMSPDH
                    STAD  BUMSPDL
                    LDAD  REFTIM      /SET HOLD TIM
                    ADDI  HOLDTIM
                    STAD  REFTIM
                    RTS
          BUMPSPD   LDAD  SPDSETL
                    ADDD  BUMSPDL
                    STAD  SPDSETL
                    LDAD  SPDSETH
                    ADDD  BUMSPDH
                    STAD  SPDSETH
          EXIT      RTS
          /
          BUTTON    EQU   $22
          FUNREG    EQU   $23
          SPDSETH   EQU   $29
          SPDSETL   EQU   $2A
          TIMERLO   EQU   $2C
          STRTFLG   EQU   $35
          BUMSPDH   EQU   $43
          BUMSPDL   EQU   $44
          SAVSPDH   EQU   $45
          SAVSPDL   EQU   $46
          REFTIM    EQU   $47
          HOLDTIM   EQU   $80      /HOLD  TIME
          DELAY     EQU   $08      /STEP  DELAY
          RUN1      EQU   $CC      /OC & CO
          RUN2      EQU   $AC      /OC & AO
          MINSPDH   EQU   $00
          MINSPDL   EQU   $18      /40 RPM
          /         END
```

## Claims

1. An orbital shaker comprising, a base (12); and electric motor (36) connected to said base (12); a suspension system (54, 56, 58, 60) connected to said base (12); a tray (14) connected to said suspension system (54, 56, 58, 60) to be movably supported thereby and coupled to said electric motor (36) to be driven thereby with respect to said base (12); means (40, 46) for generating an interrupt signal upon a predetermined increment of angular rotation of said electric motor (36); a microprocessor (100) having at least one input port for receiving digital data, at least one output port for outputting digital data to control the operation of said electric motor (36), and at least one interrupt line for receiving said interrupt signal; means (102) for inputting to said input port digital data indicative of desired speed for said electric motor (36); a high speed clock (104) for producing a frequency signal divided into many small time increments; said microprocessor (100) being programmed to convert said data indicative of a desired speed into a number of time increments of said high speed clock (104) that would occur in said predetermined increment of angular rotation of said electric motor (36) if it were being operated at said desired speed, to store the desired speed number, to count the number of time increments of said high speed clock between interrupt signals to calculate a value indicative of the actual speed of said electric motor (36) every predetermined increment of angular rotation, to compare said actual speed value with said desired speed value, and to generate a motor drive signal from a said output port which is one level if the desired speed value is less than the actual speed value and another level if the desired speed value is greater than the actual speed value, said one level of said motor drive signal turning said electric motor (36) fully on and said another level of the motor drive signal turning said electric motor (36) fully off; characterised in that said means (102) for inputting is adapted to input data to select a reversing mode of operation; and said microprocessor (100) includes a second output port for outputting a direction signal, and is programmed to respond to the selection of said reversing mode to generate a direction signal from said second output port to cyclically accelerate said electric motor (36) in a first direction of rotation until a predetermined speed is reached, hold said electric motor (36) at said predetermined speed for a set interval of time, decelerate said electric motor (36) until rotation in said first direction stops, accelerate said electric motor in a reverse direction of rotation until a predetermined speed is reached, hold said electric motor (36) at said predetermined speed for a set interval of time, and decelerate said electric motor (36) until rotation in said reverse direction stops.

2. An orbital shaker as claimed in Claim 1 characterised in that said microprocessor (100) is programmed to generate said motor drive signal to accelerate said electric motor (36) at a constant rate.

3. An orbital shaker as claimed in Claim 1 or Claim 2 characterised in that said microprocessor (100) is programmed to generate said motor drive signal to decelerate said electric motor (36) at a constant rate.

4. An orbital shaker as claimed in any preceding claim characterised in that said microprocessor (100) is programmed to generate said motor drive signal to accelerate and decelerate said electric motor (36) at constant but different rates.

5. An orbital shaker as claimed in any preceding claim characterised by reversing means (128, 130, 132, 134, 136, 138, 140, 142) for reversing the direction of current supplied to said electric motor (36) in response to said direction signal thereby reversing the direction of rotation of said electric motor (36).

6. An orbital shaker as claimed in Claim 5 characterised in that said reversing means (128, 130, 132, 134, 136, 138, 140, 142) includes a power supply circuit (128, 130) having a source terminal connected to a source of voltage (++V) and a ground terminal connected to ground; the coil (126) of said electric motor (136) being connected between said source terminal and ground terminal such that a current flows therethrough to operate said electric motor (136); a double-pole double-throw switch means (136, 138, 140) which connects said source terminal to one terminal of said coil (126) when operated in a first direction of rotation, and connects said source terminal to the other terminal of said coil (126) when operated in a second direction of rotation.

7. An orbital shaker as claimed in Claim 6 characterised in that said switch means (136, 138, 140) comprises a set of relay contacts connected as a double-pole double-throw switch; and a relay coil (140) controlled by said direction signal for changing the direction of said switch (136, 138) and thereby the direction of rotation of said electric motor (36).

8. An orbital shaker as claimed in Claim 6 or Claim 7 characterised by control switch means (130) connected in series with said coil (126) between said source terminal and said ground terminal, and adapted to switch said coil (126) on and off responsive to said motor drive signal.

## Patentansprüche

1. Umlaufrüttler, umfassend:

eine Basis (12) und einen mit der Basis (12) verbundenen Elektromotor (36),
ein mit der Basis (12) verbundenes Aufhängungssystem (54, 56, 58, 60),
einen Teller (14), welcher mit dem Aufhängungssystem (54, 56, 58, 60) derart verbunden ist, daß er durch dieses bewegbar gehalten ist, und welcher mit dem Elektromotor (36) derart gekuppelt ist, daß er durch diesen relativ zu der Basis (12) angetrieben wird,
Mittel (40, 46) zum Generieren eines Unterbrechungssignals bei einem vorbestimmten Winkeldrehungsinkrement des Elektromotors (36),
einen Mikroprozessor (100) mit wenigstens einem Eingang zum Empfang digitaler Daten, wenigstens einem Ausgang zur Ausgabe digitaler Daten zur Steuerung des Betriebs des Elektromotors (36) und wenigstens einer Unterbrechungsleitung zum Empfang des Unterbrechungssignals,
Mittel (102) zum Eingeben eine gewünschte Geschwindigkeit des Elektromotors (36) bezeichnender digitaler Daten an den Eingang,
einen Hochgeschwindigkeitstaktgeber (104) zum Erzeugen eines in viele kleine Zeitinkremente unterteilten Frequenzsignals,
wobei der Mikroprozessor (100) dazu programmiert ist, die eine gewünschte Geschwindigkeit bezeichnenden Daten in eine Zahl von Zeitinkrementen des Hochgeschwindigkeitstaktgebers (104) umzuwandeln, welche in dem vorbestimmten Winkeldrehungsinkrement des Elektromotors (36) auftreten würden, wenn er mit der gewünschten Geschwindigkeit betrieben werden würde, die gewünschte Geschwindigkeitszahl zu speichern, die Zahl der Zeitinkremente des Hochgeschwindigkeitstaktgebers zwischen Unterbrechungssignalen zu zählen, um einen die tatsächliche Geschwindigkeit des Elektromotors (36) bezeichnenden Wert bei jedem vorbestimmten Winkeldrehungsinkrement zu berechnen,

den tatsächlichen Geschwindigkeitswert mit dem gewünschten Geschwindigkeitswert zu vergleichen und ein von dem Ausgang ausgehendes Motor-Treibersignal zu generieren, welches einen Pegel annimmt, wenn der gewünschte Geschwindigkeitswert kleiner ist als der tatsächliche Geschwindigkeitswert, und einen anderen Pegel annimmt, wenn der gewünschte Geschwindigkeitswert größer ist als der tatsächliche Geschwindigkeitswert, wobei der eine Pegel des Motor-Treibersignals den Elektromotor (36) vollständig anschaltet und der andere Pegel des Motor-Treibersignals den Elektromotor (36) vollständig abschaltet,

dadurch gekennzeichnet, daß

die Mittel (102) zur Eingabe dazu ausgelegt sind, Daten aufzunehmen, um einen Umkehrmodus des Betriebs auszuwählen, und

der Mikroprozessor (100) einen zweiten Ausgang zur Ausgabe eines Richtungssignals aufweist und dazu programmiert ist, auf die Auswahl des Umkehrmodus zu reagieren, damit ein Richtungssignal an dem zweiten Ausgang generiert wird, um zyklisch den Elektromotor (36) in eine erste Drehrichtung zu beschleunigen, bis eine vorbestimmte Geschwindigkeit erreicht ist, den Elektromotor (36) während eines eingestellten Zeitintervalls auf der vorbestimmten Geschwindigkeit zu halten, den Elektromotor (36) zu verzögern, bis die Drehung in die erste Richtung anhält, den Elektromotor in eine Umkehrrichtung der Drehung zu beschleunigen, bis eine vorbestimmte Geschwindigkeit erreicht ist, den Elektromotor (36) während eines eingestellten Zeitintervalls auf der vorbestimmten Geschwindigkeit zu halten und den Elektromotor (36) zu verzögern, bis die Drehung in die Umkehrrichtung anhält.

2. Umlaufrüttler nach Anspruch 1, dadurch gekennzeichnet, daß der Mikroprozessor (100) dazu programmiert ist, das Motor-Treibersignal derart zu generieren, daß der Elektromotor (36) mit einer konstanten Rate beschleunigt wird.

3. Umlaufrüttler nach Anspruch 1 oder Anspruch 2, dadurch gekennzeichnet, daß der Mikroprozessor (100) dazu programmiert ist, das Motor-Treibersignal derart zu generieren, daß der Elektromotor (36) mit einer konstanten Rate verzögert wird.

4. Umlaufrüttler nach einem vorangehenden Anspruch, dadurch gekennzeichnet, daß der Mikroprozessor (100) dazu programmiert ist, das Motor-Treibersignal derart zu generieren, daß der Elektromotor (36) mit konstanten aber verschiedenen Raten beschleunigt und verzögert wird.

5. Umlaufrüttler nach einem vorangehenden Anspruch, gekennzeichnet durch Umkehrmittel (128, 130, 132, 134, 136, 138, 140, 142) zum Umkehren der Richtung des dem Elektromotor (36) zugeführten Stroms in Reaktion auf das Richtungssignal, wobei die Drehrichtung des Elektromotors (36) umgekehrt wird.

6. Umlaufrüttler nach Anspruch 5, dadurch gekennzeichnet, daß die Umkehrmittel (128, 130, 132, 134, 136, 138, 140, 142) umfassen:

eine Energieversorgungsschaltung (128, 130) mit einem mit einer Quellspannung (++V) verbundenen Quellanschluß und einem mit Masse verbundenen Masseanschluß,

wobei die Spule (126) des Elektromotors (136) zwischen dem Quellanschluß und Masseanschluß derart angeschlossen ist, daß ein Strom durch diese hindurch fließt, um den Elektromotor (136) zu betreiben,

doppelpolige Trennumschaltmittel (136, 138, 140), welche den Quellanschluß beim Betrieb in eine erste Drehrichtung mit einem Anschluß der Spule (126) verbinden und welche den Quellanschluß beim Betrieb in eine zweite Drehrichtung mit dem anderen Anschluß der Spule (126) verbinden.

7. Umlaufrüttler nach Anspruch 6, dadurch gekennzeichnet, daß die Schaltmittel (136, 138, 140) einen Satz Relaiskontakte, welche als ein doppelpoliger Trennumschalter verbunden sind, und eine Relaisspule (140), welche durch das Richtungssignal zum Ändern der Richtung des Schalters (136, 138) und damit der Drehrichtung des Elektromotors (36) gesteuert wird, umfassen.

8. Umlaufrüttler nach Anspruch 6 oder 7, gekennzeichnet durch Steuerschaltmittel (130), welche zwischen dem Quellanschluß und dem Masseanschluß in Reihe mit der Spule (126) verbunden sind und dazu ausgelegt sind, die Spule (126) in Reaktion auf das Motor-Treibersignal ein- und auszuschalten.

**Revendications**

1. Agitateur orbital comprenant une base (12) ; un moteur électrique (36) connecté à ladite base (12) ; un système de suspension (54, 56, 58, 60) connecté à ladite base (12) ; un plateau (14) connecté audit système de suspension (54, 56, 58, 60) de façon à pouvoir être supporté par celui-ci de façon à pouvoir se déplacer, et couplé audit moteur électrique (36) de façon à être entraîné par celui-ci par rapport à ladite base (12) ; des moyens (40, 46) pour générer un signal d'interruption lors d'un incrément prédéterminé de rotation angulaire dudit moteur électrique (36) ; un microprocesseur (100) comportant au moins un port d'entrée pour recevoir des données numériques, au moins un port de sortie pour délivrer en sortie des données numériques pour commander le fonctionnement dudit moteur électrique (36), et au moins une ligne d'interruption pour recevoir ledit signal d'interruption ; des moyens (102) pour entrer sur ledit port d'entrée des données numériques indicatives de la vitesse désirée pour ledit moteur électrique (36) ; une horloge à grande vitesse (104) pour produire un signal de fréquence divisé en de nombreux petits incréments de temps ; ledit microprocesseur (100) étant programmé pour convertir lesdites données indicatives d'une vitesse désirée en un certain nombre d'incréments de temps de ladite horloge à grande vitesse (104) qui se produiraient dans ledit incrément prédéterminé de rotation angulaire dudit moteur électrique (36) s'il fonctionnait à ladite vitesse désirée, pour mémoriser le nombre de vitesse désiré, pour compter le nombre d'incréments de temps de ladite horloge à grande vitesse entre les signaux d'interruption pour calculer une valeur indicative de la vitesse réelle dudit moteur électrique (36) à chaque incrément prédéterminé de rotation angulaire, pour comparer ladite valeur de vitesse réelle à ladite valeur de vitesse désirée, et pour générer un signal d'actionnement de moteur depuis l'un desdits ports de sortie, à un premier niveau si la valeur de vitesse désirée est inférieure à la valeur de vitesse réelle et à un autre niveau si la valeur de vitesse désirée est supérieure à la valeur de vitesse réelle, ledit premier niveau dudit signal d'actionnement de moteur mettant ledit moteur électrique (36) totalement en service et ledit autre niveau du signal d'actionnement de moteur mettant ledit moteur électrique (36) totalement hors service ; caractérisé en ce que lesdits moyens (102) pour l'entrée sont adaptés pour entrer des données afin de sélectionner un mode d'inversion de fonctionnement ; et en ce que ledit microprocesseur (100) comprend un deuxième port de sortie pour délivrer en sortie un signal de direction, et est programmé pour répondre à la sélection dudit mode d'inversion en générant un signal de direction depuis ledit deuxième port de sortie pour, de façon cyclique, accélérer ledit moteur électrique (36) dans un premier sens de rotation jusqu'à ce qu'une vitesse prédéterminée soit atteinte, maintenir ledit moteur électrique (36) à ladite vitesse prédéterminée pendant un intervalle de temps déterminé, décélérer ledit moteur électrique (36) jusqu'à ce que la rotation dans ledit premier sens s'arrête, accélérer ledit moteur électrique dans un sens de rotation inverse jusqu'à ce qu'une vitesse prédéterminée soit atteinte, maintenir ledit moteur électrique (36) à ladite vitesse prédéterminée durant un intervalle de temps déterminé, et décélérer ledit moteur électrique (36) jusqu'à ce que la rotation dans ledit sens inverse s'arrête.

2. Agitateur orbital selon la revendication 1, caractérisé en ce que ledit microprocesseur (100) est programmé pour générer ledit signal d'actionnement de moteur pour accélérer ledit moteur électrique (36) à une vitesse constante.

3. Agitateur orbital selon la revendication 1 ou la revendication 2, caractérisé en ce que ledit microprocesseur (100) est programmé pour générer ledit signal d'actionnement de moteur pour décélérer ledit moteur électrique (36) à une vitesse constante.

4. Agitateur orbital selon l'une quelconque des revendications précédentes, caractérisé en ce que ledit microprocesseur (100) est programmé pour générer ledit signal d'actionnement de moteur pour accélérer et décélérer ledit moteur électrique (36) à des vitesses constantes mais différentes.

5. Agitateur orbital selon l'une quelconque des revendications précédentes, caractérisé par des moyens d'inversion (128, 130, 132, 134, 136, 138, 140, 142) pour inverser la direction du courant délivré audit moteur électrique (36) en réponse audit signal de sens, de façon à inverser par conséquent le sens de rotation dudit moteur électrique (36).

6. Agitateur orbital selon la revendication 5, caractérisé en ce que lesdits moyens d'inversion (128, 130, 132, 134, 136, 138, 140, 142) comprennent un circuit d'alimentation (128, 130) ayant une borne de source connectée à une source de tension (++V) et une borne de masse connectée à la masse ; l'enroulement (126) dudit moteur électrique (136) étant connecté entre ladite borne de source et ladite borne de masse, de telle sorte qu'un courant circule entre elles, de façon à actionner ledit moteur électrique (136) ; des moyens formant commutateur bipolaire à deux positions (136, 138, 140) qui connectent ladite borne de source à une borne dudit enroulement (126) lors de l'actionnement dans un premier sens de rotation, et qui connectent ladite borne de source à l'autre borne dudit enroulement (126) lors de l'actionnement dans un deuxième sens de rotation.

**7.** Agitateur orbital selon la revendication 6, caractérisé en ce que lesdits moyens formant commutateur (136, 138, 140) comprennent un jeu de contacts de relais connectés sous la forme d'un commutateur bipolaire à deux positions ; et un enroulement de relais (140) commandé par ledit signal de sens de façon à changer la direction dudit commutateur (136, 138), et, par conséquent, le sens de rotation dudit moteur électrique (36).

**8.** Agitateur orbital selon la revendication 6 ou la revendication 7, caractérisé par des moyens formant commutateur de commande (130) connectés en série avec ledit enroulement (126) entre ladite borne de source et ladite borne de masse, et adaptés pour commuter ledit enroulement (126) en service et hors service en réponse audit signal d'actionnement de moteur.

FIG. 1

FIG. 2

FIG. 3

FIG. 4

FIG. 5

| KEY | CODE Ø-7 |
|---|---|
| START | Ø C |
| STOP | 14 |
| REV MODE | 15 |
| CHANGE SPEED | 06 |
| CHANGE TIME | 05 |
| 1 | C0 |
| 2 | AØ |
| 3 | 9Ø |
| 4 | 84 |
| 5 | 82 |
| 6 | 48 |
| 7 | 28 |
| 8 | 18 |
| 9 | Ø C |
| Ø | Ø A |

FIG. 6

FIG. 8

21

FIG. 7

FIG. 9

FIG. 10

EP 0 295 850 B1

FIG. II

MOTOR DRIVER 190

FIG. 12

24